# EUROPÄISCHE PATENTSCHRIFT

(11) **EP 1 828 764 B1**
(45) Veröffentlichungstag und Bekanntmachung des Hinweises auf die Patenterteilung: **20.06.2012**
(21) Anmeldenummer: 05821909.8
(22) Anmeldetag: 21.12.2005
(51) Int. Cl.: G01N 29/04, B06B 1/04, G01N 29/22

(54) **VORRICHTUNG ZUR ZERSTÖRUNGSFREIEN PRÜFUNG VON FERROMAGNETISCHEN BAUELEMENT-WÄNDEN**
DEVICE FOR TESTING FERROMAGNETIC COMPONENT WALLS WITHOUT DESTRUCTION OF THE SAME
DISPOSITIF D'ESSAI NON DESTRUCTIF DE PAROIS A COMPOSANTS FERROMAGNETIQUES

(30) Priorität: 23.12.2004 DE 102004063482
(43) Veröffentlichungstag der Anmeldung: 05.09.2007
(73) Patentinhaber: Rosen Swiss AG, 6370 Stans (CH)
(72) Erfinder: ALERS, Georg, A., San Luis Obispo, CA 93401 (US); ALERS, Ronald, B., San Luis Obispo, CA 93401 (US); BOYLE, John, J., 38220 Vizille (FR); BEUKER, Thomas, 48149 Münster (DE)
(74) Vertreter: Bünemann, Egon
(86) Internationale Anmeldenummer: PCT/EP2005/013747
(87) Internationale Veröffentlichungsnummer: WO 2006/069684

(56) Entgegenhaltungen:
- US-A- 4 100 809
- US-A- 4 301 684
- US-A- 5 537 876
- US-A- 5 866 820
- US-B1- 6 250 163

## Beschreibung

Die Erfindung betrifft eine Vorrichtung zur zerstörungsfreien Prüfung von ferromagnetischen Bauelement-Wänden nach dem Oberbegriff des Anspruchs 1. An verschiedenen Bauelementen insbesondere im Außenbereich sind Überprüfungen auf etwaige Defekte in vorgegebenen Zeitabschnitten unumgänglich, um einem Ausfallrisiko im Sinne eines Bruchs, einer Verformung oder einer Undichtigkeit zu begegnen. Wände von Rohren wie auch Wände von Behältern o. dgl. aus Stahl sind häufig korrosionsanfällig. Insbesondere können sie einer Spannungsrißkorrosion mit typischen Rissen oder Rißbündeln ausgesetzt sein, die von der Oberfläche in die Tiefe eindringen. In gleicher Weise kommen Risse aufgrund sonstiger Ursachen wie insbesondere Überbeanspruchungen in Betracht. Daneben sind andere Defekte, wie etwa Korrosionsstellen von Interesse.

Zerstörungsfreie Prüfungen verwenden beispielsweise Ultraschallverfahren, wobei die Anregung der akustischen Wellen in der Wand von außen durch elektromagnetisch-akustische Schallwandler erfolgen kann. Ein sog. "EMAT" (elektromagnetischakustischer Schallwandler) erlaubt es, akustische Plattenwellen berührungslos, insbesondere auch ohne Kopplungsmedium, in einer solchen Wand zu erregen. Dabei ist sehr viel einfacher und vielfältiger als bei mechanischer Erzeugung mit Piezo-Gebern die Erregung von "Lamb-Wellen", wie auch von Scherwellen möglich, die parallel zur Wandoberfläche polarisiert sind. Solche Scherwellen breiten sich dann quer zur Polarisation bzw. zur Schwingungsauslenkung relativ gebündelt zu zwei entgegengesetzten Richtungen aus. Diese Scherwellen, die für eine brauchbare Erregung mit einer geometrisch insbesondere hinsichtlich der Leiterabstände abgestimmten Hochfrequenz-Induktionsspule in einer geeigneten Frequenz anzustoßen sind, wobei geeignete Frequenzbereiche und Leiterabstände auch mit der Stärke der Wand variieren, können auch unterschiedliche Schwingungsformen in Abhängigkeit von der Tiefe in der Wand ausbilden. So schwingt eine Scherwelle nullter Ordnung im Inneren der Wand und auch an der gegenüberliegenden Oberfläche gleichförmig mit der obenliegenden Wandoberfläche, während eine Scherwelle erster Ordnung einen Schwingungsknoten in der Mitte der Wand ausbildet und an den gegenüberliegenden Oberfläche gegensinnig schwingt. Scherwellen höherer Ordnung bilden innerhalb der Wand mehrere Schwingungsknoten aus. Diese Schwingungsformen sind für die Wahrnehmung von Defekten unterschiedlich geeignet. Darüber hinaus muss die Schwingungserregung wie auch deren Wahrnehmung mit Sende- bzw. Empfangswandlern möglichst deutlich und störungsfrei wahrnehmbar sein.

Die US 5,537,876 ist auf die Ermittlung von Stoßverschweißungen in Stahlplatten ausgerichtet, wozu Sender- und Empfangsspule auf einer gemeinsamen Bahn für die Aussendung und Reflektion der Signale liegen, um quer zu dieser Bahn verlaufende Schweißfugen zu erkennen.

Aufgabe der Erfindung ist es dementsprechend, eine Vorrichtung zur zerstörungsfreien Prüfung von ferromagnetischen Bauelementen nach dem Oberbegriff des Anspruchs 1 so auszugestalten, dass diese Defekte vorgegebener Form, insbesondere auch Risse oder Rissbündel z.B. aufgrund von Spannungsrisskorrosion, die von der Oberfläche her in die Wand eindringen und im allgemeinen eine typische Ausrichtung aufweisen, gut detektiert werden, ohne dass dazu der bauliche Aufwand und der Energieaufwand der Vorrichtung unangemessen zu erhöhen wäre.

Gemäß der Erfindung wird diese Aufgabe von der Vorrichtung nach dem Oberbegriff des Anspruchs 1 ausgehend durch dessen kennzeichnende Merkmale gelöst.

In Weiterentwicklung der bereits bekannten Technologie der zerstörungsfreien Prüfung ferromagnetischer Bauelemente mit elektromagnetisch induzierten Ultraschall-Scherwellen hat es sich für spezielle Anwendungen, insbesondere für die Suche nach Rissen, die nur über einen Teil der Tiefe in eine Wand eindringen, als vorteilhaft herausgestellt, Scherwellen höherer Ordnung zu erregen und damit insbesondere den oberflächennahen Bereich hervorzuheben und betont zu erfassen. Schon eine Scherwelle erster Ordnung ist in der Lage, mit innen abnehmenden Schwingungsamplituden einen mittleren, innenliegenden Bereich der Wand bei der Prüfung meßtechnisch zu unterdrücken. Dies gilt in verstärktem Maße für eine Scherwelle zweiter Ordnung. Bei Scherwellen höherer Ordnung sind größere Empfindlichkeiten bezüglich oberflächennaher Defekte festzustellen, wobei allerdings die Modendispersion mit zunehmender Ordnung ansteigt und zu einem Zerlaufen der Wellenpakete führt. Die Scherwelle zweiter Ordnung ist eine oft besonders glückliche Kombination zwischen der Auswahl der interessierenden Prüfungstiefe innerhalb der Wand, einer verläßlichen und beherrschbaren Funktion des Sendewandlers und einem ausreichenden Signal in einem zugehörigen Empfangswandler liegt.

Für die elektromagnetische Induktion von Ultraschallwellen ist eine Magnetisierung des zu prüfenden Bereichs der Bauelemente-Wand vorzusehen, die üblicherweise mit einem oder mehreren Dauermagneten erzielt wird, wobei ein magnetischer Kreis, ggf. mit einem Magnetjoch durch die Wand des zu prüfenden Bauelements geschlossen wird. Hier läßt sich nun beobachten, daß eine Ausrichtung der Bahn der induzierten Wellen entsprechend der Magnetrichtung zwar eine Vielzahl von Schwingungskomponenten, auch Lambwellen, infolge der dabei auftretenden Lorentz-Kräfte auslöst, daß die im vorliegenden Fall aber besonders interessierenden und durch magnetostriktive Effekte zu erzielenden horizontal polarisierten Scherwellen höherer Ordnung besonders dann günstig zu erzeugen und zu empfangen sind, wenn die Ausrichtung der Bahn unter einem Schrägwinkel zur Magnetrichtung liegt. Dieser Winkel zwischen der Ausrichtung der Bahn und der Magnetrichtung sollte vorteilhaft zwischen 10° und 60° liegen, optimal zwischen 20° und 50°.

Vorteilhaft wird dann ein Empfangswandler seitlich zu der Bahn positioniert und auf einen vorgegebenen Prüfbereich in der Bahn ausgerichtet, so daß er einerseits aus diesem Prüfbereich gestreute oder reflektierte Signale gut aufnimmt, die direkt vom Sendewandler ausgehenden Signale aber nur in verringertem Maße empfängt und diese direkten Signale aufgrund seiner Ausrichtung auf den Prüfbereich (und nicht auf den Sendewandler) schon von der Empfangscharakteristik her reduziert wahrnimmt.

Die Ausrichtung des Empfangswandlers auf einen vorgegebenen Prüfbereich in der Bahn, die ihrerseits zu der Ausrichtung des Sendewandlers folgt, bedingt lediglich eine winklige Ausrichtung zwischen Sendewandler und Empfangswandler. Bei Rissen o. dgl. gestreckten Defekten wie Spannungsrissen oder Spannungsrißbündeln ist allerdings nicht von einer diffusen Streuung auftreffender Scherwellen auszugehen, sondern von einer Wellenreflektion mit etwa spiegelsymmetrischen Verhältnissen zwischen eintreffender und reflektierter Welle, wobei der Empfangswandler bei bekannter oder vorwiegend interessierender Ausrichtung der Defekte auf den sich ergebenden Reflektionswinkel auszurichten ist.

Hinsichtlich dieser Winkelbeziehungen bleibt festzuhalten, daß die Magnetrichtung nicht auf die Hauptrichtung der Defekte festgelegt ist. Die Magnetisierung der Bauelementewand als Basis für die Induktionswirkungen von Sendewandler und Empfangswandler kann durchaus abweichend von der angenommenen Hauptrichtung der Defekte vorgegeben werden. Die Vorgabe, daß die Ausrichtung der Bahn der Scherwellen unter einem Schrägwinkel zur Magnetrichtung liegen soll und daß Sendewandler und Empfangswandler auf Reflektionen von den Defekten hin zusammenarbeiten sollen, kann allerdings durchaus zu einer vorteilhaften und einfachen Festlegung führen, daß die Magnetrichtung der Hauptrichtung der Defekte folgt oder zu dieser Hauptrichtung senkrecht gerichtet ist.

Die geometrischen Verhältnisse sind nicht nur zu einer effektiven Erregung von Scherwellen und zu einer sensiblen und verläßlichen Prüfung von ferromagnetischen Wänden auf Defekte zu berücksichtigen, sie gehen auch in die bauliche Gestaltung derartiger Vorrichtungen ein. Zu einer rationellen Überprüfung von großflächigen Wänden, etwa an Behältern, sind verfahrbare Meßeinrichtungen mit einer Vielzahl solcher Vorrichtungen, eng gestaffelt, zur zerstörungsfreien Prüfung vorzusehen, die mit ihren Prüfbereichen die Wand lückenlos streifenförmig abtasten. Noch bedeutsamer ist das Einsatzgebiet in Rohrleitungen, deren gesamter Wandumfang mit dem Durchlauf eines Meßmolchs zerstörungsfrei geprüft werden soll. Auch hier ergibt sich mit dem Rohrumfang eine Arbeitsbreite für den Meßmolch, die nur mit einer Vielzahl aneinandergefügter Vorrichtungen der hier betrachteten Art erreicht wird.

Ausführungsbeispiele ergeben sich aus der Zeichnung und der nachfolgenden Beschreibung. In der Zeichnung zeigen:
- Fig. 1: Schrägansicht einer Plattenwand mit Richtungspfeilen für die Auslenkungen an der Oberfläche bei einer Scherwelle,
- Fig. 2, 3 u. 4: Längsschnitte durch eine Platte bei Scherwellen nullter, erster, bzw. zweiter Ordnung
- Fig. 5 bis 11: schematische Darstellungen von Sendewandlern in Bezug auf die Magnetrichtung und
- Fig. 12 bis 17: Ausführungsformen von Induktionsspulen für die EMAT-Wandler.

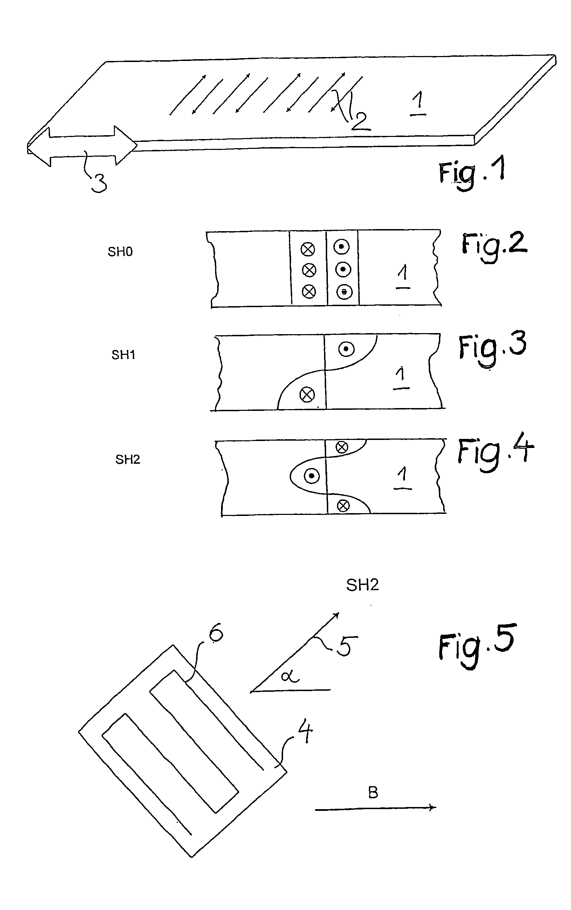

In Fig. 1 ist eine mit 1 bezeichnete Platte (oder ein entsprechender Wandausschnitt) dargestellt, auf der wechselnde Richtungspfeile 2 die Auslenkungen des Materials in Folge einer stehenden oder abklingenden Scherwelle zu einem Betrachtungszeitpunkt zeigen. Eine solche Scherwelle kann durch einen elektromagnetisch-akustischen Schallwandler (EMAT) berührungslos in die Platte 1 etwa in Höhe eines Doppelpfeils 3 induziert werden, der auch eine Ausbreitung mit einsetzender Erregung in beiden Richtungen des Doppelpfeils 3 anzeigt.

Die Fig. 2, 3 und 4 veranschaulichen nun, daß die Scherwellen sich zum Inneren der Platte keineswegs gleichförmig fortsetzen müssen. Dies ist nur bei der Scherwelle nullter Ordnung SH0 gem. Fig. 2 der Fall. Eine Scherwelle erster Ordnung SH1 gemäß Fig. 3 schwingt vielmehr an einer Plattenoberfläche gegensinnig zu der anderen Oberfläche und bildet in der Plattenmittelebene Schwingungsknoten aus. Schon damit ergibt sich eine im Inneren der Platte verringerte Beteiligung des Materials an der Schwingung gegenüber der Plattenoberfläche.

Noch stärker grenzt sich die horizontale Scherwelle zweiter Ordnung SH2 mit zwei Schwingungsknoten auf die oberflächennahe Beteiligung an der Scherwelle ein, zumal die Schwingungen an der Oberfläche maßgeblich für Empfangssignale sind, die induktiv von außen aufgenommen werden können. Dies ist von besonderem Interesse für Risse u. dgl. Defekte, die von außen etwa in Folge Spannungsrißkorrosion in eine Platte oder Wand eindringen. Defekte mit begrenzter Eindringtiefe sind bei einer Überprüfung von besonderem Interesse und werden von den horizontalen Scherwellen höherer Ordnung sehr viel besser erfaßt als von der horizontalen Scherwelle nullter Ordnung. Mit "Scherwellen höherer Ordnung" sind hier also die Scherwellen höher als der nullten Ordnung (SHO) bezeichnet.

Zur Erregung solcher Scherwellen ist generell eine Magnetisierung der ferromagnetischen Wand vorauszusetzen, die im allgemeinen als statische Magnetisierung über einen Dauermagnet-Kreis erfolgt, wobei der magnetische Fluß eines oder mehrerer starker Dauermagnete, ggf. auch über Magnetjoche und Polschuhe an zwei voneinander beabstandeten Stellen in die Wand eingeleitet und innerhalb dieser durchgeleitet wird. Dies ist in Fig. 5 mit einem Pfeil B für die magnetische Induktion angezeigt, die eine gleichmäßige und gleichgerichtete Magnetisierung in einer Platte andeutet, über der ein Sendewandler 4 angeordnet ist, der eine in Richtung eines Pfeils 5 (und in Gegenrichtung) sich ausbreitende Scherwelle zweiter Ordnung SH2 in der Platte erregen soll.

Eine effiziente Erregung setzt eine geeignete geometrische Form einer im allgemeinen mäanderförmigen Induktionsspule 6 mit optimiertem Abstand zwischen den Leitern und darüber hinaus ein insbesondere in der Frequenz passendes Induktionssignal voraus, wobei die Frequenz eine Hochfrequenz ist, die etwa in den Bereichen von 10 kHz bis 5 Megaherz liegen kann und sich konkret nach der Ordnung der zu erregenden Scherwelle und der Stärke der Wand ergibt.

Darüber hinaus hat sich gezeigt, daß die Abstrahlrichtung der Scherwelle entsprechend dem Pfeil 5 insbesondere für die Effektivität der Erregung, aber auch für das Ausblenden anderer, durch Überlagerung bei der Prüfung störender Wellen von Bedeutung ist. Dabei hat ein Schrägwinkel α, wie er hier zwischen dem Pfeil 5 und dem Pfeil B zu sehen ist, durchaus Vorteile. Während einer Abstrahlung des Sendewandlers 4 in Magnetrichtung gemäß Pfeil B einen hohen Anteil an anderen, insbesondere an Lambwellen erzeugt, ergibt sich ein Maximum für die Abstrahlung horizontaler Scherwellen SH2 in einem Schrägwinkelbereich von 20° bis 50° und eine etwas geringere aber immer noch vorteilhafte Abstrahlung in einem erweiterten Schrägwinkelbereich zwischen 10° und 60°.

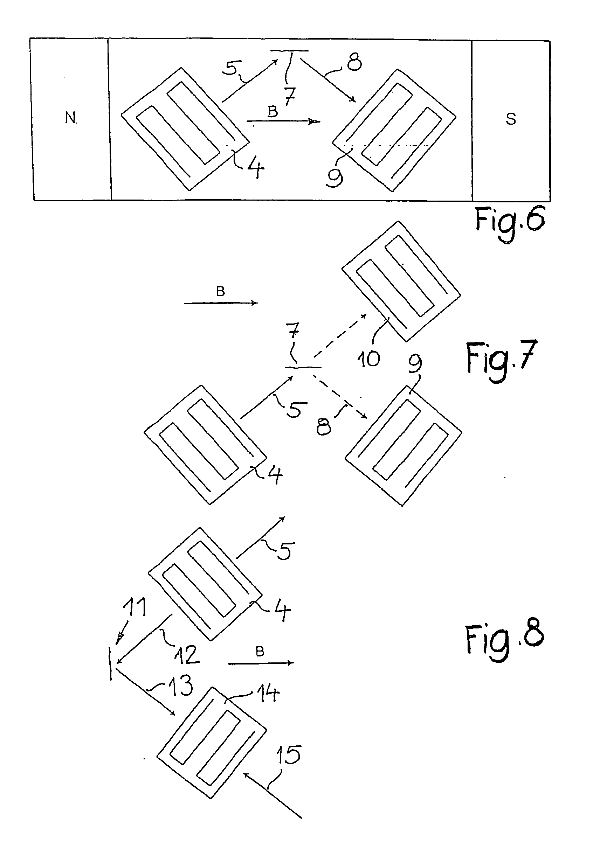

Aus Fig. 6 ist nun vollständiger ersichtlich, daß die Magnetrichtung mit einem Pfeil B durch ein statisches Magnetfeld zwischen einem magnetischen Nordpol N und einem magnetischen Südpol S verläuft und daß ein Sendewandler 4 horizontale Scherwellen in Richtung des Pfeils 5 abstrahlt. Diese treffen in der dargestellten Situation auf einen von der Oberfläche ausgehenden Riß 7, der im wesentlichen gerade gestreckt verläuft, allerdings nur mit einer auf einen Bruchteil der Wandstärke der zu prüfenden Bauelement-Wand begrenzten Eindringtiefe. Als Scherwelle höherer Ordnung mit entsprechend vorrangiger Erfassung des oberflächennahen Bereichs der zu prüfenden Wand erfährt diese eine signifikante Reflexion in Richtung eines Pfeils 8. Die reflektierte Welle wird von einem Empfangswandler 9, der grundsätzlich entsprechend dem Sendewandler 4 aufgebaut sein kann, aufgenommen und an geeignete Meß- und Aufzeichnungsgeräte weitergeleitet. Es werden also Signale empfangen, die den Riß anhand der Empfangssignale im Empfangswandler 9 umschreiben. Der Empfangswandler 9 ist dabei senkrecht zu dem Pfeil 8 für die Reflektionsrichtung der Scherwelle ausgerichtet, wobei die Ausbreitungsrichtungen gemäß den Pfeilen 5 und 8 entsprechend den allgemeinen Grundsätzen für die Reflektion von Wellen spiegelbildlich zur Normalen auf die Hauptausrichtung des Risses 7 liegen.

Der Riß 7 ist hier etwa parallel zur Magnetrichtung entsprechend dem Pfeil B angenommen, so daß die reflektierte Welle gemäß dem Pfeil 8 unter einem entsprechenden Schrägwinkel α zur Magnetisierung nach Pfeil B läuft. Insofern ergeben sich auch für den Empfangswandler 9 günstige physikalische Empfangsverhältnisse.

Fig. 7 zeigt die Anordnung, bei der die statische Magnetisierung nur noch durch den Pfeil B angedeutet ist, erfindungsgemäß ergänzt durch einen weiteren Empfangswandler, nämlich einen Referenzwandler 10, der entsprechend dem Empfangswandler 9 ausgebildet ist, aber so zu dem Sendewandler 4 in Richtung des Pfeils 5 aber mit gleicher Ausbreitungsentfernung wie der Sendewandler 9 gegenüberstehend positioniert und ausgerichtet ist, daß er ganz oder teilweise durchlaufende Scherwellen aufnimmt. Das sich daraus ergebende Signal liefert also ein Referenzsignal für den Empfangswandler 9, mit dem das Empfangssignal bei fehlender Reflektion - also in einem Wandbereich ohne Defekte - normiert werden kann und in dem auch bei Auftreten eines Reflektionssignals im Empfangswandler 9 ein Rückschluß auf die Stärke des Reflektionssignals zu ziehen ist. Damit ergibt sich unabhängig von der ggf. materialabhängigen und auch schwankenden Qualität der Einkopplung der Scherwellen durch den Sendewandler 4 und der Aufnahmeeffizienz des Empfangswandlers 9 eine Bezugsgröße für die geometrische Bewertung des festgestellten Defektes.

In Fig. 8 ist eine Ergänzung der vorstehenden Meßanordnung aus Fig. 7 dargestellt, die allerdings auch als Alternative für die Prüfung auf querlaufende Risse allein dienen kann. Hier geht es um Defekte, die etwa quer zur Magnetisierungsrichtung (Induktionspfeil B) verlaufen. Ein solcher Riß 11 kann mit der zweiten Ausbreitungsrichtung der induzierten Scherwelle entgegen dem Pfeil 5 in Richtung eines Pfeils 12 erfaßt werden, um dann eine Reflektion in Richtung eines Pfeils 13 zu erzielen. Diese Reflektion kann durch einen Empfangswandler 14 in geeigneter Position und in Ausrichtung auf die Reflektion aus Richtung des Pfeils 13 aufgenommen werden. Auch hier ergibt sich wieder ein günstiger Empfangswinkel α in Bezug auf die Magnetisierung.

Im Zusammenspiel mit mehreren Sendewandlern kann der Empfangswandler 14 (und entsprechend auch jeder andere Empfangswandler) von zwei gegenüberliegenden Richtungen einlaufende Scherwellen aufnehmen, wie dies durch einen Pfeil 15 angedeutet ist. Damit ist Bauformen Rechnung zu tragen, die in gedrängter Bauweise eine Vielzahl von Sendewandlern und Empfangswandlern aufweisen, die in breiter, geschlossener Front einen Streifen auf einer platten Wand oder einen Rohrquerschnitt mit einem Durchlauf überprüfen.

Weiterhin ist aus Fig. 7 und 8 ersichtlich, daß mit der Ausrichtung und Positionierung der Wandler zueinander sowohl Risse zu erfassen sind, die in Richtung des Magnetfeldes verlaufen, wie auch solche, die vorwiegend quer dazu verlaufen. Somit ist dann, wenn etwa Längsrisse in bzw. an einem Rohr entdeckt werden sollen, auch eine Magnetisierung in Querrichtung (Umfangsrichtung) einsetzbar, die dann natürlich auch mit anderer Zuordnung von Wandlern Längsrisse zu entdecken ermöglicht.

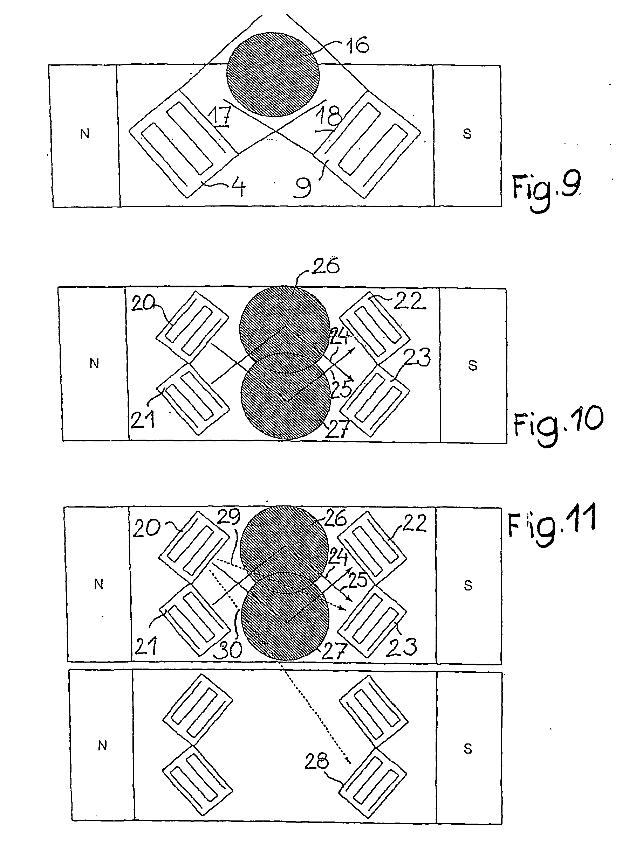

Aus den Fig. 9 bis 11 wird ersichtlich, wie die lückenlose Erfassung einer ferromagnetischen Bauelement-Wand, insbesondere einer Rohrwand, durch eine Kombination der erfindungsgemäßen Vorrichtungen erfolgen kann. In Fig. 9 ist die bereits in Fig. 6 betrachtete Meßanordnung wiedergegeben, bei der ein homogenes Magnetfeld zwischen einem Nordpol N und einem Südpol S in einer Bauelement-Wand bereitgestellt wird und zwischen diesen Magnetpolen im Bereich des Magnetfeldes ein Sendewandler 4 und ein Empfangswandler 9 angeordnet sind. Beide sind auf einen Prüfbereich 16 ausgerichtet, in dem evtl. Defekte detektiert werden sollen. Dazu gehen vom Sendewandler 4 induzierte Scherwellen in einer (genutzten) Richtung aus, wobei eine vorgegebene nutzbare Wellenenergie im Bereich einer Bahn 17 festzustellen ist, die sich mit deutlicher Bündelung, wenn auch einer gewissen Aufweitung vom Sendewandler 4 zum Prüfbereich 16 und darüber hinaus erstreckt.

Ebenso läßt sich für den Empfangswandler 9 auf der Seite des Prüfbereichs 16 ein gerichteter und einigermaßen gebündelter Bereich - hier nur mit einem Bereich 18 wiedergegeben - feststellen, aus dem die ggf. als Reflektion einfallenden Scherwellen hinreichend deutlich aufgenommen werden. Die Richtcharakteristik beider EMAT-Wandler ist also durch eine als "Bahn" bezeichnete Bündelung gekennzeichnet. Dabei besteht ein Interesse daran, den Laufweg der akustischen Wellen kurz zu wählen, um geometrische Ausbreitungsverluste minimieren zu können.

In einer Ausgestaltung gemäß Fig. 10 sind nun innerhalb des statischen Magnetfeldes zwischen einem eingezeichneten Nordpol N und einem Südpol S zwei Sendewandler 20,21 und zwei Empfangswandler 22,23 so angeordnet, daß sie jeweils paarweise auf vorgegebenen sich über kreuzenden Reflektionslinien 24,25 zusammenarbeiten, und zwar in Bezug auf zwei Prüfbereiche 26,27, die sich mit geringfügiger Überschneidung so ergänzen, daß die gesamte Breite der Magnetpole abgedeckt wird. Eine Bewegung der entsprechenden Vorrichtung in Richtung des Magnetfelds führt also zu einer Abdeckung der gesamten Breite mit Prüfbereichen 26,27. Dabei wird die von den Magnetpolen gelieferte Magnetisierung für die zwei verschränkt zueinander arbeitenden Prüfvorrichtungen genutzt.

Die in Fig. 11 veranschaulichte Anordnung mehrerer solcher Dauermagnete mit entsprechenden Prüfvorrichtungs-Paaren gemäß Fig. 10 zeigt allerdings auch, daß ein Übersprechen zwischen Empfangswandlern und Sendewandlern erfolgen kann, die nicht im Reflektionssinne einander zugeordnet sind. Dies ist durchaus aufschlußreich im prüftechnischen Sinne, wenn etwa von dem Sendewandler 20 ausgehende Signale von dem Empfangswandler 23 empfangen werden, der eigentlich auf von dem Sendewandler 21 ausgehende Reflektionswellen ausgerichtet ist. Ebenso können bei einem Empfangswandler 28 langlaufende Signale des Sendewandlers 20 empfangen werden. Solche Empfangssignale, deren Laufwege als Pfeile 29,30 mit gebrochenen Pfeillinien eingezeichnet sind, sind nach Laufzeit und Dämpfung einzustufen. Insbesondere gibt die Dämpfung bei beschichteten oder ummantelten Platten oder Rohren Aufschluß über den Zustand der Beschichtung bzw. Ummantelung. Fehlende Beschichtungen oder auch solche, die sich infolge von Korrosion oder Unterwanderung von der Oberfläche der ferromagnetischen Wand abgelöst haben, führen zu einer erheblich verringerten Dämpfung der Scherwelle in Bezug auf ihre Lauflänge und indizieren damit eine fehlerhafte Beschichtung.

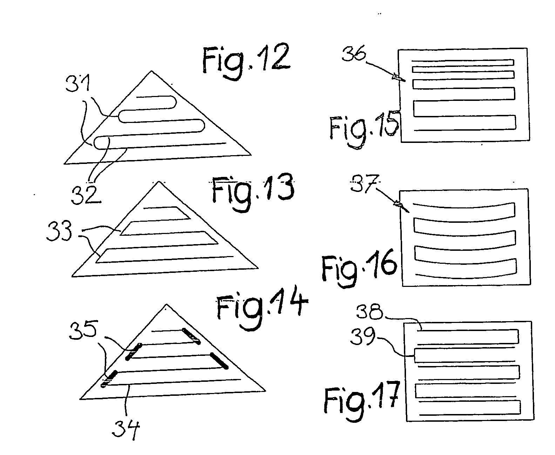

Die elektromagnetisch-akustische Anregung von Scherwellen geht von Sendewandlern aus, die bekanntermaßen eine in den Fig. 5 bis 11 dargestellte Form aufweisen, d.h. in einer Folge von Mäanderschleifen bestehen. Die Formgebung ist auf die angestrebten Scherwellen abzustimmen. Dabei ergeben die parallelen langen Leiterabschnitte der Mäanderschleifen eine Hauptrichtung, die auch die Ausbreitungsrichtung der Scherwellen ist. In den Fig. 12 bis 17 sind verschiedene Varianten für die entsprechenden Induktionsspulen dargestellt. Darüber hinaus ist es von Bedeutung, eine gute Raumausnutzung innerhalb des Magnetfeldes mit kurzen Wegen für die Schallwellen und deren Reflektionen zu erzielen.

So sind die in den Fig. 12 bis 14 dargestellten Ausführungsformen von Induktionsspulen auf einer Fläche in Form eines rechtwinkligen Dreiecks unterzubringen. Dies ermöglicht es, Sendewandler und Empfangswandler raumsparend in Eckbereichen des zwischen Nordpol und Südpol etwa gemäß Fig. 6 zur Verfügung stehenden Raumes unterzubringen und unter einem durchaus günstigen Schrägwinkel von etwa 45° zur Magnetrichtung eine Bahn für die Scherwellenausbreitung und ebenso für deren Reflektionen festzulegen. Abgerundete Umlenkungen 31 an Leiterbahnen 32 wie in Fig. 12 vermeiden Nebenabstrahlungen in irgendeiner anderen Richtung, während geradlinige Umlenkungsabschnitte 33 wie in Fig. 13 Nebenabstrahlungen in Querrichtung zu diesen Leiterabschnitten 33 hervorrufen, die ggf. für Hilfsmessungen genutzt werden. So können damit Ultraschall-Plattenwellen bei einem Prüfungsdurchlauf eines Molchs durch ein Rohr in Längsrichtung des Rohres hin induziert werden, deren Reflektionen vor allem Schweißnähte im Rohr für eine Positionsbestimmung signalisieren können.

Eine Leiterschleife 34 gem. Fig. 14 mit verbreiterten Kehren 35 schafft geringere Stromdichten an den Verbreiterungen, die dort auch zu verringerten elektromechanischen Anregungskräften führen und somit ebenfalls wie die gerundeten Schleifenkehren 31 Nebenabstrahlungen unterdrücken.

Die Fig. 15 bis 17 zeigen schleifenförmige EMAT-Spulen in genereller Rechteckanordnung. Bei einer Auslegung einer Spulengeometrie 36 gemäß Fig. 15 kann eine Impulskompression dadurch erreicht werden, daß die Leiterabstände und damit die Wellenlänge monoton variiert werden ("Chirping"), da die Geschwindigkeit der Scherwellen höherer Ordnung eine Funktion der Wellenlänge ist. Bei ausreichender Bandbreite der Anregung kann ein Wellenpaket erzeugt werden, das aufgrund der Dispersion in sich zusammenläuft und dabei eine Anhebung der Amplituden erreicht. Dies ist insbesondere im Impulsechoverfahren nützlich zur Bestimmung der Echolaufzeit als Maß für die Entfernung eines reflektierteren Defektes von Sende- und Empfangswandlern.

Eine hohlspiegelähnliche Krümmung der Leiter 36 in einer Induktionsspule gemäß Fig. 16 führt zu einer Verringerung des Öffnungswinkels beim Schallbündel. Dadurch wird der Prüfbereich verkleinert und die Lokalisierung präzisiert, wenn man die Ausbreitungsrichtung nach oben gemäß Fig. 16 betrachtet. In der entgegengesetzten Ausbreitungsrichtung entsteht eine Defokussierung, die den Prüfbereich zu erweitern erlaubt.

Eine Induktionsspule gemäß Fig. 17 besteht aus einer Mehrzahl eigenständiger Leiterschleifen 38,39, die mit festzulegendem Abstand zueinander individuell anzusteuern sind. Durch Phasenverschiebung zwischen den Einzelanregungen ist eine Steuerung der Abstrahlcharakteristik möglich ("Phased Array"), während eine Amplitudenmodulation zur Optimierung der Signalform der akustischen Welle herangezogen werden kann ("Apodisation", "Shading").

Solche Induktionsspulen werden beispielsweise bei einer Frequenz von 500 Kiloherz zu einer Folge von 15 Impulsen angeregt, entsprechend der dann Ultraschallwellen, insbesondere auch die hier betrachteten Scherwellen höherer Ordnung, in dem zu prüfenden Material erregt werden können. Kurze Impulsfolgen in diesem Frequenzbereich erlauben es, mit Taktfolgen von einigen hundert Herz zu arbeiten, ohne daß sich im Zusammenspiel vieler, räumlich benachbart liegender Prüfvorrichtungen ein Übersprechen ergibt. Damit sind auch selbst bei Meßeinrichtungen wie etwa Meßmolchen in Rohren mit einer Fahrgeschwindigkeit von mehreren Metern pro Sekunde Meßwiederholungen in so dichter Folge möglich, daß auch in Bewegungsrichtung eines solchen Meßmolches keine Überwachungslücken eintreten.

## Patentansprüche

1. Vorrichtung zur zerstörungsfreien Prüfung von ferromagnetischen Bauelement-Wänden wie Rohr- oder Plattenwänden auf Risse (7,11) oder sonstige gestreckte Defekte durch Ultraschallwellen, insbesondere Scherwellen, die in einem in vorgegebener Magnetrichtung (B) magnetisierten Wandbereich durch eine Hochfrequenz-Induktionsspule (4,20,21) erregt werden, sich auf einer mit der Induktionsspule als Sendewandler (4,20,21) ausrichtbaren Bahn (17) ausbreiten und in einem Abstand vom Sendewandler (4,20,21) durch zumindest eine Induktionsspule als Empfangswandler (9,10,14,22,23,28) aufgenommen werden, wobei die Ausrichtung der Bahn (17) unter einem Schrägwinkel a zur Magnetrichtung (B) liegt, der Empfangswandler (9,22,23) seitlich zu der Bahn (17) liegt und auf einen vorgegebenen Prüfbereich (16,26,27) in der Bahn (17) ausgerichtet ist, **dadurch gekennzeichnet, dass** die Auslegung der Wandler (4,9,10,14,20,21,22,23,28) und die nach der Stärke der Wand zu bestimmende Hochfrequenz auf die Erregung von horizontalen Scherwellen höherer Ordnung ausgelegt ist und dass in der Bahn (17) hinter dem Prüfbereich (16) ein weiterer Empfangswandler als Referenzwandler (10) liegt und auf den Sendewandler (4) ausgerichtet ist.

2. Vorrichtung nach Anspruch 1, **dadurch gekennzeichnet, dass** der Schrägwinkel α zwischen 20° und 60° liegt.

3. Vorrichtung nach Anspruch 2, **dadurch gekennzeichnet, dass** der Schrägwinkel α im Bereich von 30° bis 50° liegt.

4. Vorrichtung nach einem der Ansprüche 1 bis 3, **dadurch gekennzeichnet, dass** der Sendewandler (4,20,21) und der Empfangswandler (9,22,23) bezüglich einer für Defekte angesetzten Hauptrichtung im Sinne von Einfallswinkel und Reflektionswinkel ausgerichtet sind.

5. Vorrichtung nach Anspruch 4 zur Anwendung bei Rohren, **dadurch gekennzeichnet, dass** die Wand des Rohres achsparallel magnetisiert ist und dass die Ausrichtung von Sendewandler (4,20,21) und Empfangswandler (9,22,23) unter gegensinnig gleichem Winkel zu einer axialen Richtung erfolgt.

6. Vorrichtung nach Anspruch 4 zur Anwendung bei Rohren, **dadurch gekennzeichnet, dass** die Wand des Rohres in Umfangsrichtung magnetisiert ist und dass die Ausrichtung von Sendewandler und Empfangswandler unter gegensinnig gleichem Winkel zu einer Umfangsrichtung erfolgt.

7. Vorrichtung nach einem der Ansprüche 1 bis 6, **dadurch gekennzeichnet, dass** die Bahn (17) beiderseits des Sendewandlers (4) zur Prüfung von Defekten genutzt wird und dass ein zweiter Empfangswandler (14) in Ausrichtung auf einen zweiten Prüfbereich seitlich zur Bahn (17) liegt.

8. Vorrichtung nach einem der Ansprüche 1 bis 7, **dadurch gekennzeichnet, dass** der Sendewandler eine Nebenabstrahlrichtung mit in gleicher Richtung verlaufenden Leiterabschnitten (33) ausbildet.

9. Vorrichtung nach einem der Ansprüche 1 bis 8, **dadurch gekennzeichnet, dass** Sendewandler (20,21) und Empfangswandler (22,23) paarweise mit gegensinnig geschränkten Bahnen lückenlos aneinanderliegende Prüfbereiche (26,27) bilden.

10. Vorrichtung nach einem der Ansprüche 1 bis 9, **dadurch gekennzeichnet, dass** die Sendewandler (20) mit Empfangswandiern (23,28) zu Laufzeit- und Dämpfungsmessungen verbunden sind.

11. Vorrichtung nach einem der Ansprüche 1 bis 10, **dadurch gekennzeichnet, dass** sie mit gleichartigen Vorrichtungen zu einem System mit sich lückenlos ergänzenden Prüfbereichen (26,27) verbunden ist.

12. Vorrichtung nach Anspruch 11, **dadurch gekennzeichnet, dass** sie am Umfang eines Messmolchs für eine zerstörungsfreie Prüfung von Rohrwänden angeordnet ist.

13. Vorrichtung nach einem der Ansprüche 1 bis 12, **dadurch gekennzeichnet, dass** die Induktionsspule als Sende- oder Empfangswandler auf einer dreieckigen Grundfläche ausgebildet ist.

14. Vorrichtung nach einem der Ansprüche 1 bis 13, **dadurch gekennzeichnet, dass** die Leiter der Induktionsspule mäanderförmig mit einer Mehrzahl langer paralleler Leiterabschnitte (32) gelegt sind.

15. Vorrichtung nach Anspruch 14, **dadurch gekennzeichnet, dass** die langen parallelen Leiterabschnitte miteinander durch Bogen (31) verbunden sind.

16. Vorrichtung nach Anspruch 14, **dadurch gekennzeichnet, dass** die langen parallelen Leiterabschnitte durch kurze Leiterabschnitte (33) übereinstimmender Ausrichtung miteinander verbunden sind.

17. Vorrichtung nach Anspruch 14, **dadurch gekennzeichnet, dass** die langen parallelen Leiterabschnitte durch verbreiterte Leiterabschnitte (35) miteinander verbunden sind.

18. Vorrichtung nach Anspruch 14, **dadurch gekennzeichnet, dass** die langen parallelen Leiterabschnitte der Induktionsspule (36) unterschiedliche, in der Aufeinanderfolge monoton geänderte Abstände aufweisen.

19. Vorrichtung nach Anspruch 14, **dadurch gekennzeichnet, dass** die langen parallelen Leiterabschnitte der Induktionsspule (37) gleichsinnig gebogen sind.

20. Vorrichtung nach Anspruch 14, **dadurch gekennzeichnet, dass** die langen parallelen Leiterabschnitte mehrere, getrennt anzusteuernde Leiterschleifen (38,39) bilden.

## Claims

1. A device for the non-destructive testing of ferromagnetic component walls, such as pipe or plate walls, for cracks (7, 11) or other elongated defects by means of ultrasound waves, especially shear waves, which are excited in a wall region magnetised in a predetermined magnet direction (B) by a high-frequency induction coil (4, 20, 21), are propagated on a strip (17) that can be aligned with the induction coil embodied as an emitting transducer (4, 20, 21) and are received at a distance from the emitting transducer (4, 20, 21) by means of at least one induction coil embodied as a receiving transducer (9, 10, 14, 22, 23, 28), wherein the alignment of the strip (17) lies at a slant angle α to the magnet direction (B), the receiving transducer (9, 22, 23) lies at the side of the strip (17) and is aligned on a predetermined test region (16, 26, 27) in the strip (17), **characterised in that** the layout of the transducers (4, 9, 10, 14, 20, 21, 22, 23, 28) and the high frequency to be determined according to the thickness of the wall is designed for the excitation of higher-order horizontal shear waves and that a further receiving transducer embodied as a reference transducer (10) lies in the strip (17) behind the test region (16) and is aligned on the emitting transducer (4).

2. The device according to claim 1, **characterised in that** slant angle α lies between 20° and 60°.

3. The device according to claim 2, **characterised in that** slant angle α lies in the range from 30° to 50°.

4. The device according to any one of claims 1 to 3, **characterised in that** the emitting transducer (4, 20, 21) and the receiving transducer (9, 22, 23) are aligned in the sense of incident angle and reflection angle with respect to a main direction set out for defects.

5. The device according to claim 4 for use with pipes, **characterised in that** the wall of the pipe is magnetised parallel to the axis and that the alignment of emitting transducer (4, 20, 21) and receiving transducer (9, 22, 23) takes place at the same angle to an axial direction in opposite directions.

6. The device according to claim 4 for use with pipes, **characterised in that** the wall of the pipe is magnetised in the circumferential direction and that the alignment of emitting transducer and receiving transducer takes place at the same angle to a circumferential direction in opposite directions.

7. The device according to any one of claims 1 to 6, **characterised in that** the strip (17) on both sides of the emitting transducer (4) is used for the testing of defects and that a second receiving transducer (14) lies in alignment on a second testing region at the side of the strip (17).

8. The device according to any one of claims 1 to 7, **characterised in that** the emitting transducer forms a secondary emission direction with conductor sections (33) running in the same direction.

9. The device according to any one of claims 1 to 8, **characterised in that** emitting transducers (20, 21) and receiving transducers (22, 23) form in pairs test regions (26, 27) lying adjacent to one another in a gapless manner with strips crossed in opposite directions.

10. The device according to any one of claims 1 to 9, **characterised in that** the emitting transducers (20) are connected to receiving transducers (22, 28) for propagation and attenuation measurements.

11. The device according to any one of claims 1 to 10, **characterised in that** it is connected to similar devices to form a system with test regions (26, 27) complementing one another in a gapless manner.

12. The device according to claim 11, **characterised in that** it is disposed at the periphery of a measuring probe for none-destructive testing of pipe walls.

13. The device according to any one of claims 1 to 12, **characterised in that** the induction coil is constituted as an emitting or receiving transducer on a triangular base area.

14. The device according to any one of claims 1 to 13, **characterised in that** the conductors of the induction coil are laid in a meandering form with a plurality of long parallel conductor sections (32).

15. The device according to claim 14, **characterised in that** the long parallel conductor sections are connected to one another by arches (31).

16. The device according to claim 14, **characterised in that** the long parallel conductor sections are connected to one another by short conductor sections (33) of corresponding alignment.

17. The device according to claim 14, **characterised in that** the long parallel conductor sections are connected to one another by widened conductor sections (35).

18. The device according to claim 14, **characterised in that** the long parallel conductor sections of the induction coil (36) have spacings changed monotonically in the sequence.

19. The device according to claim 14, **characterised in that** the long parallel conductor sections of the induction coil (37) are curved in the same direction.

20. The device according to claim 14, **characterised in that** the long parallel conductor sections form a plurality of conductor loops (38, 39) which are controlled separately.

## Revendications

1. Dispositif destiné à contrôler de manière non destructive sur des parois à composants ferromagnétiques, telles que des parois de tubes ou plaques, la présence de fissures (7, 11) ou autres défauts développés par des ondes ultrasoniques, en particulier des ondes de cisaillement qui sont excitées dans une zone de paroi magnétisée dans un sens magnétique (B) prescrit par une bobine d'inductance à haute fréquence (4, 20, 21), se propagent sur une voie (17) pouvant être orientée avec la bobine d'inductance servant de convertisseur d'émission (4, 20, 21) et sont reçues à une distance du convertisseur d'émission (4, 20, 21) par au moins une bobine d'inductance servant de convertisseur de réception (9, 10, 14, 22, 23, 28), sachant que l'orientation de la voie (17) se situe selon un angle oblique α par rapport au sens magnétique (B), le convertisseur de réception (9, 22, 23) se situe latéralement par rapport à la voie (17) et est orienté sur une zone d'essai prescrite (16, 26, 27) dans la voie (17), **caractérisé en ce que** le dimensionnement des convertisseurs (4, 9, 10, 14, 20, 21, 22, 23, 28) et la haute fréquence à déterminer selon l'épaisseur de la paroi sont conçus sur l'excitation d'ondes de cisaillement horizontales d'ordre supérieur et **en ce qu'**un autre convertisseur de réception servant de convertisseur de référence (10) se situe dans la voie (17) derrière la zone d'essai (16) et est orienté sur le convertisseur d'émission (4).

2. Dispositif selon la revendication 1, **caractérisé en ce que** l'angle oblique α est compris entre 20 et 60°.

3. Dispositif selon la revendication 2, **caractérisé en ce que** l'angle oblique α est compris entre 30 et 50°.

4. Dispositif selon l'une quelconque des revendications 1 à 3, **caractérisé en ce que** le convertisseur d'émission (4, 20, 21) et le convertisseur de réception (9, 22, 23) sont orientés par rapport à un sens principal mis en place pour des défauts au sens de l'angle d'incidence et l'angle de réflexion.

5. Dispositif selon la revendication 4 destiné à être utilisé pour des tubes, **caractérisé en ce que** la paroi du tube est magnétisée de manière parallèle à l'axe et **en ce que** l'orientation du convertisseur d'émission (4, 20, 21) et du convertisseur de réception (9, 22, 23) est effectuée selon un angle identique en sens inverse par rapport à un sens axial.

6. Dispositif selon la revendication 4 destiné à être utilisé pour des tubes, **caractérisé en ce que** la paroi du tube est magnétisée dans le sens périphérique et **en ce que** l'orientation du convertisseur d'émission et du convertisseur de réception est effectuée selon un angle identique en sens inverse par rapport à un sens périphérique.

7. Dispositif selon l'une quelconque des revendications 1 à 6, **caractérisé en ce que** la voie (17) est utilisée de part et d'autre du convertisseur d'émission (4) pour le contrôle des défauts et **en ce qu'**un second convertisseur de réception (14) se situe, orienté sur une seconde zone d'essai, latéralement par rapport à la voie (17).

8. Dispositif selon l'une quelconque des revendications 1 à 7, **caractérisé en ce que** le convertisseur d'émission réalise un sens de rayonnement secondaire avec des sections conductrices (33) s'étendant dans le même sens.

9. Dispositif selon l'une quelconque des revendications 1 à 8, **caractérisé en ce que** le convertisseur d'émission (20, 21) et le convertisseur de réception (22, 23) forment par paire avec des voies limitées en sens inverse des zones d'essai (26, 27) continues reposant l'une sur l'autre.

10. Dispositif selon l'une quelconque des revendications 1 à 9, **caractérisé en ce que** les convertisseurs d'émission (20) sont reliés aux convertisseurs de réception (23, 28) pour des mesures du temps de transit et d'affaiblissement.

11. Dispositif selon l'une quelconque des revendications 1 à 10, **caractérisé en ce qu'**il est relié aux dispositifs de même type pour former un système avec des zones d'essai (26, 27) se complétant en continu.

12. Dispositif selon la revendication 11, **caractérisé en ce qu'**il est disposé sur la périphérie d'un grattoir de mesure pour une vérification non destructive des parois de tube.

13. Dispositif selon l'une quelconque des revendications 1 à 12, **caractérisé en ce que** la bobine d'inductance est réalisée comme un convertisseur d'émission ou de réception sur une surface de base triangulaire.

14. Dispositif selon l'une quelconque des revendications 1 à 13, **caractérisé en ce que** les conducteurs de la bobine d'inductance sont posés en forme de méandre avec une pluralité de longues sections conductrices (32) parallèles.

15. Dispositif selon la revendication 14, **caractérisé en ce que** les longues sections conductrices parallèles sont reliées entre elles par des arcs (31).

16. Dispositif selon la revendication 14, **caractérisé en ce que** les longues sections conductrices parallèles sont reliées entre elles par de courtes sections conductrices (33) d'orientation concordante.

17. Dispositif selon la revendication 14, **caractérisé en ce que** les longues sections conductrices parallèles sont reliées entre elles par des sections conductrices élargies (35).

18. Dispositif selon la revendication 14, **caractérisé en ce que** les longues sections conductrices parallèles de la bobine d'inductance (36) présentent différentes distances modifiées de manière monotone à la suite les unes des autres.

19. Dispositif selon la revendication 14, **caractérisé en ce que** les longues sections conductrices parallèles de la bobine d'inductance (37) sont pliées dans le même sens.

20. Dispositif selon la revendication 14, **caractérisé en ce que** les longues sections conductrices parallèles forment plusieurs boucles conductrices (38, 39) à commander séparément.
